**Europäisches Patentamt**

**European Patent Office**

**Office européen des brevets**

(19)

(11) Veröffentlichungsnummer : **0 303 809 B1**

(12)

# EUROPÄISCHE PATENTSCHRIFT

(45) Veröffentlichungstag der Patentschrift :
26.06.91 Patentblatt 91/26

(51) Int. Cl.⁵ : **B22F 5/00**, B22F 3/14,
F16H 53/00

(21) Anmeldenummer : **88110604.1**

(22) Anmeldetag : **02.07.88**

(54) **Verfahren zur pulvermetallurgischen Herstellung von Nocken.**

(30) Priorität : **19.08.87 DE 3727571**

(43) Veröffentlichungstag der Anmeldung :
**22.02.89 Patentblatt 89/08**

(45) Bekanntmachung des Hinweises auf die
Patenterteilung :
**26.06.91 Patentblatt 91/26**

(84) Benannte Vertragsstaaten :
**DE ES FR GB IT SE**

(56) Entgegenhaltungen :
**WO-A-85/03464**
**GB-A- 2 105 752**
**GB-A- 2 153 388**

(73) Patentinhaber : **Ringsdorff-Werke GmbH**
**Drachenburgstrasse 1 Bad Godesberg**
**W-5300 Bonn 2 (DE)**

(72) Erfinder : **Dönch, Jürgen, Dr.**
**Leonardusstrasse 34**
**W-5300 Bonn 2 (DE)**
Erfinder : **Schelb, Bernhard, Dr.**
**Lommerwiese 67**
**W-5330 Königswinter (DE)**
Erfinder : **Zimmermann, Wolfgang, Dipl.-Ing.**
**Im Meisengarten 25**
**W-5300 Bonn 2 (DE)**

## Beschreibung

Die Erfindung betrifft ein Verfahren zur pulvermetallurgischen Herstellung von Nocken für Nockenwellen, welche über das gesamte Nockenvolumen konstante Werkstoffeigenschaften, insbesondere einen konstanten Elastizitätsmodul haben und gut schleifbar sind.

Zur Steuerung, beispielsweise der Ventile von Verbrennungsmotoren verwendete Nocken und Nockenwellen werden üblicherweise als Ganzes hergestellt, besonders aus Grauguß oder Hartguß ; ihre Oberfläche ist gehärtet und geschliffen. Es ist auch bekannt, die Nocken pulvermetallurgisch herzustellen, auf eine Stahlwelle aufzuschieben und Nocken und Welle miteinander zu verbinden. Wesentliche Vorteile dieser Lösung sind die Verringerung der beschleunigten Massen, die höhere Steifigkeit der Stahlwelle sowie die Verminderung der Schleifarbeit. Nachteilig ist das aufwendige Fügen, besonders wenn die Verbindung durch Löten hergestellt wird. Maß- und Werkstofftoleranzen sind zwar bei diesem Verfahren unkritisch, Lot und Lötverfahren sind jedoch vergleichsweise teuer. Ein weiterer Nachteil ist die Erwärmung der Nocken beim Löten, so daß die übliche Wärmebehandlung der Nocken erst im zusammengebauten Zustand vorgenommen werden kann.

Ein anderes Verfahren zum Verbinden von Nocken und Welle ist das Aufschrumpfen der Nocken. Da die Drehmomente durch den Preß-Schrumpfsitz übertragen werden, wird eine ausreichende Festigkeit der Verbindung nur erreicht, wenn die Bohrungstoleranzen sehr klein sind. Die Bohrungstoleranz ist von geringerer Bedeutung, wenn der Sitz durch Aufweiten der meist rohrförmig ausgebildeten Welle nach dem Aufschieben der Nocken erzeugt wird. In beiden Ausbildungsformen wird die Festigkeit des Sitzes und damit das übertragbare Drehmoment begrenzt durch die Streuung des Elastizitätsmoduls und der Dehngrenze innerhalb der pulvermetallurgisch hergestellten Nocken. Schwankungen des Elastizitätsmoduls und der Dehngrenze bedingen ungleichmäßige Verformungen und stellenweise Überlastungen des Nockens und können so zum Lockern des Sitzes führen.

Für pulvermetallurgisch hergestellte Werkstoffe gibt es einen direkten Zusammenhang zwischen der Porosität und den Werkstoffeigenschaften, einschließlich des Elastizitätsmoduls und der Dehngrenze. In pulvermetallurgisch hergestellten Bauteilen, welche durch Pressen und Sintern hergestellt sind, ist die Porosität nicht über das gesamte Bauteilvolumen gleichmäßig verteilt. Die Poren sind vielmehr in bestimmten durch die Form des Preßlings und die Fließfähigkeit des Preßpulvers gegebenen Bereichen konzentriert. Gradienten der Porosität bedingen unmittelbar Gradienten der physikalischen Werkstoffeigenschaften.

Zur Verminderung der Porosität von pulvermetallurgisch hergestellten Körpern sind mehrere Verfahren bekanntgeworden, beispielsweise das Schmieden oder das heißisostatische Pressen der Sinterlinge. Beim ersten Verfahren erreicht man eine Verdichtung der Körper, die Gradienten der Porosität bleiben aber weitgehend erhalten. Nur durch heißisostatisches Pressen kann die Porosität der pulvermetallurgisch hergestellten Bauteile im wesentlichen eliminiert werden. Die physikalischen Werkstoffeigenschaften sind dann über das ganze Bauteilvolumen konstant und isotrop.

Ein Vorteil pulvermetallurgisch hergestellter Nocken ist die große Anpassungsfähigkeit des Werkstoffs. Ohne größeren zusätzlichen Aufwand ist es möglich, die Zusammensetzung des Werkstoffs den spezifischen Belastungsbedingungen anzupassen. Es sind auch Zusammensetzungen möglich, die mit Gußlegierungen wegen Seigerung und Kornwachstum nicht verwirklicht werden können. In den bisher bekanntgewordenen Nocken wird dieser Spielraum aber nur zu einem Teil genutzt. Nocken mit guter Verschleißfestigkeit lassen sich nur mit hohem Aufwand schleifen, gut bearbeitbare Nocken haben vergleichsweise hohe Verschleißraten.

Der Erfindung liegt daher die Aufgabe zugrunde, ein Verfahren zum pulvermetallurgischen Herstellen von Nocken zu schaffen, die bei guter Verschleißbeständigkeit noch gut zu bearbeiten sind und als Voraussetzung für eine dauerhafte Verbindung mit einer Welle über ihren gesamten Querschnitt konstante Werkstoffeigenschaften, insbesondere einen konstanten Elastizitätsmodul und eine konstante Streckgrenze haben.

Die Aufgabe wird erfindungsgemäß mit einem Verfahren der eingangs genannten Art dadurch gelöst, daß

a) die Nocken aus einem Pulvergemisch gepreßt werden, das mit carbidbildenden Elementen der 5. und 6. Nebengruppe des Periodensystems legiertes Eisenpulver und Graphitpulver in der zur Carbidbildung nötigen Menge enthält,

b) die Preßlinge bei einer Temperatur von höchstens 50 K oberhalb der Solidus-Temperatur gesintert und

c) durch heißisostatisches Pressen bei einer Temperatur unterhalb der Solidus-Temperatur auf wenigstens 99% der theoretischen Dichte verdichtet werden.

Die zur Herstellung der Nocken verwendeten legierten Eisenpulver enthalten als Legierungselemente vorzugsweise 3 bis 5 Gew.% Chrom, 0,3 bis 1,0 Gew.% Molybdän, bis zu 0,5 Gew.% Vanadium und gegebenenfalls in kleineren Mengen noch andere Elemente der 5. oder 6. Nebengruppe des Periodensystems. Die maximale Partikelgröße der handelsüblichen Legierungen sollten zweckmäßig höchstens 0,2 mm betragen. Das legierte Eisenpulver wird mit Graphitpulver und einem Preßhilfsmittel gemischt und ein Pulvergemisch erzeugt, das vorzugsweise 96,5 bis 98,5 Gew.% legiertes Eisenpulver, 1,0 bis 2,5 Gew.% Graphitpulver und 0,1 bis 1,0 Gew.% Preßhilfsmittel enthält. Als Graphitpulver, dessen maximale Partikelgröße weniger als 0,05, besonders weniger als 0,02 mm betragen sollte, eignen sich pulverförmiger Naturgraphit, Elektrographit oder auch graphitierter Ruß. Als Preßhilfsmittel verwendet man zweckmäßig handelsübliche Gleitwachse. Die Pulver werden in Trommelmischern, Doppelkonusmischern oder ähnlichen Aggregaten gemischt und das Pulvergemisch wird bei Raumtemperatur auf Gesenkpressen zu Nocken verpreßt. Die Preßdrücke betragen etwa 600 bis 800 M Pa.

Die Preßlinge haben eine Festigkeit, die zum Transport und zur Weiterverarbeitung ausreicht. Die Porosität beträgt etwa 20% und die Poren sind – wie Dichtemessungen und metallographische Untersuchungen belegen – ungleichmäßig verteilt.

Die Sinterbedingungen, bei denen Carbide der Legierungselemente in den Korngrenzen ausgeschieden werden, ein zusammenhängendes aus diesen Carbiden bestehendes, den Aufwand beim Schleifen wesentlich vergrößerndes Netzwerk aber nicht gebildet wird, hängen außer von der Sintertemperatur von der Sinterzeit ab. Alle Parameter lassen sich schnell mit einfachen Vorversuchen bestimmen. Keinesfalls darf die Sintertemperatur aber mehr als 50 K über der Solidus-Temperatur liegen. Die Schleifhärte der gesinterten Nocken ist vergleichsweise gering, die Porosität beträgt etwa 5% und die Poren sind im wesentlichen geschlossen. Die nachteiligen, größeren Streuungen von Elastizitätsmodul und Bruchdehnung bedingende ungleichmäßige Verteilung der Poren bleibt beim Sintern im wesentlichen erhalten.

Die gesinterten Nocken werden durch heißisostatisches Pressen auf wenigstens 99% ihrer theoretischen Dichte verdichtet, vorzugsweise auf die theoretische Dichte. Da die Poren der gesinterten Nocken geschlossen sind, d.h. nicht mit der Nockenoberfläche in Verbindung stehen, ist für das Pressen eine druckübertragende Hülle im allgemeinen nicht nötig. Die Preßtemperatur ist kleiner als die Solidus-Temperatur, so daß das nach dem Sintern erhaltene Werkstoffgefüge im wesentlichen erhalten bleibt. Die Porosität wird praktisch ausschließlich durch plastisches Fließen auf eine Restporosität von weniger als 1% reduziert. Die Preßtemperatur beträgt je nach Zusammensetzung der gesinterten Nocken vorzugsweise 900 bis 1050°C ; der Preßdruck ist 100 bis 500 bar und die Verweilzeit 30 bis 90 mim.

Nach dem heißisostatischen Pressen kann in an sich bekannter Weise das Eigenschaftsspektrum der Nocken durch Härten und Anlassen den Verwendungsbedingungen angepaßt werden. Besonders die Ermüdungsfestigkeit, die im Einsatzfall wegen der auftretenden hohen Hertzischen Pressung gefordert ist, kann so verbessert werden. Heißisostatisches Pressen und Härten können auch in einem Arbeitsgang durchgeführt werden. Neuere Ofenkonstruktionen ermöglichen auch die Zusammenfassung der Arbeitsschritte Sintern, heißisostatisches Pressen, Härten.

Verfahrensgemäß hergestellte Nocken enthalten keine oder fast keine Poren und haben ein außerordentlich gleichförmiges Gefüge. Entsprechend konstant sind die physikalischen Eigenschaften, besonders auch Elastizitätsmodul und Streckgrenze.

Die Streuung der Werkstoffeigenschaften ist außerordentlich klein, wie die folgende Tabelle zeigt :

$$Rohdichte: \qquad 7,8 \pm 0,04 \ g/cm^3$$

$$Elastizitätsmodul: \qquad 200 \pm 2 \ M \ Pa$$

$$Härte: \qquad 50 \pm 1,5 \ HRC$$

Die Absolutwerte hängen von der Zusammensetzung und der Wärmebehandlung der Nocken ab.

Durch Aufschrumpfen der Nocken auf die Welle oder durch Aufweiten der Welle hergestellte Verbindungen von Nocken und Wellen haben eine ausgezeichnete Festigkeit und ermöglichen die Übertragung hoher Drehmomente. Die Verbindungen lockern sich dabei nicht. Da die Schleifhärte der Nocken vergleichsweise gering ist, lassen sich Nocken und Welle in bekannter Weise zusammen schleifen.

Die Erfindung wird nachfolgend anhand eines Beipiels erläutert :

Beispiel

Nocken wurden aus einer Pulvermischung gepreßt, enthaltend 97,3% handelsübliches legiertes Eisenpulver mit 3% Chrom, 0,35% Mangan, 0,40% Molybdän, 0,25% Vanadium, 2,5% Graphit und 0,3% Amidwachs als Gleitmittel. Die maximale Korngröße des legierten Eisenpulvers betrug 200 µm, die Korngröße des Graphitpulvers 15 µm. Gemischt wurde in einem Doppelkonusmischer, Mischzeit 10 min. Auf einer Gesenkpresse wurden mit einem Druck von 600 M Pa Nocken gepreßt, deren Porosität 22% betrug. Die Nocken hatten folgende Abmessungen – große Achse 50 mm, kurze Achse 40 mm, Höhe 25 mm, Bohrungsdurchmesser 30 mm.

EP 0 303 809 B1

Die Nocken wurden im Vakuum gesintert :

```
Temperatur        1050  K
Verweilzeit         30  min
Druck              < 1  mbar
```

Die gesinterten Nocken, deren Porosität etwa 5% betrug, wurden heißisostatisch verdichtet. Die Bedingungen waren wie folgt :

```
Aufheizen auf 1000 °C in einer Stunde,
dabei Erhöhung des Drucks auf 500 bar

Haltezeit 1 h
Abkühlen von 1000°C auf Raumtemperatur in
einer Stunde

Schutzgas - Argon
```

Die Nocken waren porenfrei. In der metallischen Matrix waren Karbide mit einer mittleren Größe von 3 µm und einer maximalen Größe von 10 µm gleichmäßig dispergiert. Es gab keine leisten- oder netzfömige Strukturen. Durch eine Wärmebehandlung wurde eine Härte von 55 ± 1 HRC eingestellt. Die Nocken ließen sich ausgezeichnet schleifen, die geschliffene Oberfläche war glatt und ohne Ausbrüche.

## Ansprüche

1. Verfahren zur pulvermetallurgischen Herstellung von Nocken für Nockenwellen, die über das Nockenvolumen konstante Werkstoffeigenschaften haben und gut schleifbar sind, wobei
    a) die Nocken aus einem Pulvergemisch gepreßt werden, das mit carbidbildenden Elementen der 5. und 6. Nebengruppe des Periodensystems legiertes Eisenpulver und Graphitpulver in der zur Carbidbildung nötigen Menge enthält,
    b) die Preßlinge bei einer Temperatur von höchstens 50 K oberhalb der Solidustemperatur gesintert und
    c) durch heißisostatisches Pressen bei einer Temperatur unterhalb der Solidustemperatur auf mindestens 99% der theoretischen Dichte verdichtet werden.

2. Verfahren nach Patentanspruch 1, dadurch gekennzeichnet, daß ein 3 bis 5 Gew.% Chrom, 0,3 bis 1,0 Gew.% Molybdän und bis zu 0,5 Gew.% Vanadium enthaltendes legiertes Eisenpulver verwendet wird.

3. Verfahren nach den Patentansprüchen 1 und 2, dadurch gekennzeichnet, daß ein Pulvergemisch verwendet wird, das 96,5 bis 98,5 Gew.% legiertes Eisenpulver, 1,0 bis 2,5 Gew.% Graphitpulver und 0,1 bis 1,0 Gew.% Preßhilfsmittel enthält.

4. Verfahren nach den Patentansprüchen 2 und 3, dadurch gekennzeichnet, daß beim Sintern kein aus Carbiden bestehendes Netzwerk gebildet und die zugänglichen Poren geschlossen werden.

5. Verfahren nach den Patentansprüchen 1 bis 4, dadurch gekennzeichnet, daß die gesinterten Körper auf die theoretische Dichte verdichtet werden.

6. Verfahren nach den Patentansprüchen 1 bis 5, dadurch gekennzeichnet, daß die gesinterten Körper bei einer Temperatur von 900 bis 1050°C, einem Druck von 100 bis 500 bar und einer Haltezeit von 30 bis 90 min isostatisch verdichtet werden.

7. Verfahren nach den Patentansprüchen 1 bis 6, dadurch gekennzeichnet, daß die Sinterung und das heißisostatische Pressen im gleichen Ofen durchgeführt werden.

8. Verfahren nach den Patentansprüchen 1 bis 7, dadurch gekennzeichnet, daß die verdichteten Nocken einer Wärmebehandlung durch Härten und Anlassen unterzogen werden.

4

## Claims

1. Process for the powder metallurgical production of cams for camshafts, which have constant material properties over the cam volume and are readily grindable, wherein

a) the cams are pressed from a powder mixture which contains iron powder alloyed with carbide forming elements of the 5th and 6th sub group of the Periodic System and graphite powder in the amount required for carbide formation,

b) the blanks are sintered at a temperature at most 50 K above the solidus temperature and

c) are compressed by hot isostatic pressing at a temperature below the solidus to at least 99% of the theoretical density.

2. Process according to claim 1, **characterised in that** an alloyed iron powder containing 3 to 5% by weight of chromium 0.3 to 1.0% by weight of molybdenum and up to 0.5% of vanadium is used.

3. Process according to claims 1 and 2, **characterised in that** a powder mixture is used which contains 96.5 to 98.5% by weight of alloyed iron powder, 1.0 to 2.5% by weight of graphite powder and 0.1 to 1.0% by weight of pressing auxiliary.

4. Process according to claims 2 and 3, **characterised in that**, on sintering, a lattice consisting of carbides is not formed and the accessible pores are closed.

5. Process according to claims 1 to 4, **characterised in that** the sintered bodies are compressed to the theoretical density.

6. Process according to claims 1 to 5, **characterised in that** the sintered bodies are compressed isostatically at a temperature of 900 to 1050°C, a pressure of 100 to 500 bar and a holding time of 30 to 90 minutes.

7. Process according to claims 1 to 6, **characterised in that** the sintering and the hot isostatic pressing are carried out in the same furnace.

8. Process according to claims 1 to 7, **characterised in that** the compressed cams are subjected to a heat treatment by hardening and tempering.

## Revendications

1. Procédé de fabrication par métallurgie des poudres de cames pour les arbres à cames, qui possèdent des propriétés de matériaux constantes sur le volume de la came, et sont facilement polissables selon lequel:

a) les cames sont pressées à partir d'un mélange de poudres contenant de la poudre de fer alliée avec des éléments formant des carbures du 5ème et du 6ème sous-groupe de la classification périodique, et de la poudre de graphite en quantité nécessaire pour la formation de carbure,

b) les agglomérats sont frittés à une température d'au maximum 50°K au-dessus de la température du solidus,

c) et par pressage isostatique à chaud à une température en-dessous de la température de solidus, sont compactés à au moins 99% de la densité théorique.

2. Procédé selon la revendication 1, caractérisé en ce qu'une poudre de fer alliée contenant :

– de 3 à 5% en poids de chrome,

– de 0,3 à 1% en poids de molybdène et jusqu'à 0,5% en poids de vanadium est utilisée.

3. Procédé selon les revendications 1 et 2, caractérisé en ce qu'on utilise un mélange de poudres contenant de 96,5 à 98,5% en poids de poudre de fer alliée, de 1,0 à 2,5% en poids de poudre de graphite et de 0,1 à 1,0% d'adjuvant de pressage.

4. Procédé selon les revendications 2 et 3, caractérisé en ce que par frittage, il ne se forme aucun réseau formé de carbure et que les pores accessibles sont fermés.

5. Procédé selon les revendications 1 à 4, caractérisé en ce que les solides frittés sont compactés à la densité théorique.

6. Procédé selon les revendications 1 à 5, caractérisé en ce que les solides frittés sont compactés d'une manière isostatique à une température de 900 à 1050°C, à une pression de 100 à 500 bars et pendant d'exécution de séjour de 30 à 90 mn.

7. Procédé selon les revendications 1 à 6, caractérisé en ce que le frittage et le pressage isostatique à chaud, sont effectués dans le même four.

8. Procédé selon les revendications 1 à 7, caractérisé en ce que les cames compactées sont soumises à un traitement thermique pour trempe et revenu.